# EUROPEAN PATENT APPLICATION

(11) **EP 4 597 926 A1**
(43) Date of publication of application: **06.08.2025**
(21) Application number: 23876434.4
(22) Date of filing: 12.09.2023
(51) Int. Cl.: H04L 9/32, G06F 21/62

(54) **PRIVACY DATA USE METHOD AND APPARATUS BASED ON PRIVACY COMPUTING**

(30) Priority: 09.10.2022 CN 202211227875
(71) Applicant: ZTE CORPORATION, Shenzhen, Guangdong 518057 (CN)
(72) Inventor: ZENG, Ming, Shenzhen, Guangdong 518057 (CN); TU, Yaofeng, Shenzhen, Guangdong 518057 (CN); WANG, Dezheng, Shenzhen, Guangdong 518057 (CN); GUO, Haisheng, Shenzhen, Guangdong 518057 (CN); GAO, Hong, Shenzhen, Guangdong 518057 (CN)
(74) Representative: Ziebig Hengelhaupt Intellectual Property Attorneys Patentanwaltskanzlei PartGmbB
(86) International application number: PCT/CN2023/118185
(87) International publication number: WO 2024/078229

(57) **Abstract**

The present application discloses a privacy data use method and apparatus based on privacy computing. The method comprises: a data provider publishes to a data service module metadata carrying an identity credential, wherein the identity credential is used for proving that an anonymous identity of the data provider is trustable; a data applicant sends a data computing request to the data service module on the basis of the metadata published to the data service module, wherein the data computing request carries a first privacy computing policy; the data service module randomly fragments the data corresponding to the metadata into a plurality of pieces of fragment data, and allocates the plurality of pieces of fragment data to different computing nodes according to the first privacy computing policy; the plurality of computing nodes perform privacy computing on the allocated fragment data according to the first privacy computing policy to obtain a plurality of fragment computing results; and the data service module sends a summarized privacy computing result to the data applicant according to the plurality of fragment computing results so as to provide the summarized privacy computing result to the data applicant for use.

## Description

### CROSS-REFERENCE TO RELATED APPLICATIONS

The present application claims the priority to the Chinese patent application No. 202211227875.6 filed to the China Patent Office on October 9, 2022, and entitled "Privacy Data Use Method and Apparatus Based on Privacy Computing", the entire contents of which are incorporated herein by reference.

### TECHNICAL FIELD

The present application relates to the technical field of data privacy protection, in particular to a privacy data use method and apparatus based on privacy computing.

### BACKGROUND

Privacy computing, also known as privacy protection computing, can perform analysis and computing on data on the premise of ensuring that a data provider does not leak original data, thereby ensuring that the data flows securely in a "available but invisible" manner. In addition to the characteristic of "data available but invisible", a multi-party secure computing technology in privacy computing can also control the usage and use amount of the data, thereby achieving "controllable and measurable usage" of the data.

However, using privacy computing does not equate to achieving anonymization of personal data. Privacy computing protects personal information subjects rather than privacy. Privacy computing in the related art still faces data security problems and cannot protect personal privacy of a data provider. On the one hand, there is a certain correlation between the data provider and the data itself, and an applicant may infer the original data based on a result, resulting in the leakage of the original data. On the other hand, the data provider may know the computing purpose of the applicant according to a computing method requested by the applicant, and thus may interfere with the computing by providing false data, causing the computing result invalid.

How to improve the security and validity of privacy computing is a technical problem to be solved by the present application.

### SUMMARY

The objective of embodiments of the present application is to provide a privacy data use method and apparatus based on privacy computing, so as to solve a problem of low security and validity of privacy computing.

In a first aspect, a privacy data use method based on privacy computing is provided, including: publishing, by a data provider, metadata carrying an identity credential to a data service module, wherein the identity credential is used for proving that an anonymous identity of the data provider is trustable; sending, by a data applicant, a data computing request to the data service module on the basis of the metadata published to the data service module, wherein the data computing request carries a first privacy computing policy requested by the data applicant to perform computing on the metadata; randomly fragmenting, by the data service module, data corresponding to the metadata into a plurality of pieces of fragment data, and allocating the plurality of pieces of fragment data to different computing nodes according to the first privacy computing policy; performing, by the plurality of computing nodes, privacy computing on the allocated fragment data according to the first privacy computing policy to obtain a plurality of fragment computing results; and sending, by the data service module, a summarized privacy computing result to the data applicant according to the plurality of fragment computing results so as to provide the summarized privacy computing result to the data applicant for use.

In a second aspect, a privacy data use method based on privacy computing is provided, applied to a data service module and including: receiving metadata which carries an identity credential and is published by a data provider and a data computing request which is sent by a data applicant based on the published metadata, wherein the identity credential is used for proving that an anonymous identity of the data provider is trustable, and the data computing request carries a first privacy computing policy requested by the data applicant to perform computing on the metadata; randomly fragmenting data corresponding to the metadata into a plurality of pieces of fragment data, and allocating the plurality of pieces of fragment data to different computing nodes according to the first privacy computing policy, so as to instruct the plurality of computing nodes to perform privacy computing on the allocated fragment data according to the first privacy computing policy to obtain a plurality of fragment computing results; and sending a summarized privacy computing result to the data applicant according to the plurality of fragment computing results so as to provide the summarized privacy computing result to the data applicant for use.

In a third aspect, an electronic device is provided, the electronic device includes a processor, a memory, and a computer program stored in the memory and executable by the processor, and the computer program, when executed by the processor, implements steps of the method as described in the first aspect, or steps of the method as described in the second aspect.

In a fourth aspect, a computer readable storage medium is provided, the computer readable storage medium has a computer program stored therein, and the computer program, when executed by a processor, implements steps of the method as described in the first aspect, or steps of the method as described in the second aspect.

### BRIEF DESCRIPTION OF DRAWING(S)

Accompanying drawings illustrated here are used for providing a further understanding of the present application, and constitute a part of the present application. The schematic embodiments of the present application and their explanations are used for explaining the present application and do not constitute an improper limitation on the present application. In the figures:
Fig. 1a is a first schematic flowchart of a privacy data use method based on privacy computing in an embodiment of the present application.
Fig. 1b is a schematic structural diagram of a system that applies a privacy data use method based on privacy computing in an embodiment of the present application.
Fig. 2a is a second schematic flowchart of a privacy data use method based on privacy computing in an embodiment of the present application.
Fig. 2b is a schematic flowchart of identity registration of a data provider of a privacy data use method based on privacy computing in an embodiment of the present application.
Fig. 3a is a third schematic flowchart of a privacy data use method based on privacy computing in an embodiment of the present application.
Fig. 3b is a schematic structural diagram of a Merkle tree of a privacy data use method based on privacy computing in an embodiment of the present application.
Fig. 3c is a schematic diagram of an identity credential Json format of a privacy data use method based on privacy computing in an embodiment of the present application.
Fig. 4a is a fourth schematic flowchart of a privacy data use method based on privacy computing in an embodiment of the present application.
Fig. 4b is a schematic flowchart of requesting to bind a data source by a data provider of a privacy data use method based on privacy computing in an embodiment of the present application.
Fig. 5 is a fifth schematic flowchart of a privacy data use method based on privacy computing in an embodiment of the present application.
Fig. 6a is a sixth schematic flowchart of a privacy data use method based on privacy computing in an embodiment of the present application.
Fig. 6b is a schematic flowchart of allocating data fragments of a privacy data use method based on privacy computing in an embodiment of the present application.
Fig. 6c is a schematic diagram of a storage format of a computing process of a privacy data use method based on privacy computing in an embodiment of the present application.
Fig. 6d is a schematic flowchart of performing privacy computing of a privacy data use method based on privacy computing in an embodiment of the present application.
Fig. 7a is a seventh schematic flowchart of a privacy data use method based on privacy computing in an embodiment of the present application.
Fig. 7b is a schematic approval flowchart of a privacy data use method based on privacy computing in an embodiment of the present application.
Fig. 8 is a schematic flowchart of a privacy data use method based on privacy computing applied to a data service module in an embodiment of the present application.
Fig. 9 is a schematic structural diagram of a privacy data use apparatus based on privacy computing in an embodiment of the present application.
Fig. 10 is a schematic structural diagram of a privacy data use apparatus based on privacy computing in another embodiment of the present application.

### DETAILED DESCRIPTION

The technical solutions in the embodiments of the present application will be clearly and completely described in the following with reference to the accompanying drawings in the embodiments of the present application. Apparently, the described embodiments are some rather than all of the embodiments of the present application. All other embodiments obtained by those ordinarily skilled in the art based on the embodiments in the present application without making creative efforts shall fall within the scope of protection of the present application. The drawing numbers in the present application are only used to distinguish various steps in the solution and are not used to limit an execution order of the various steps. The specific execution order shall be subject to the description in the specification.

In the field of privacy computing, the correctness of privacy computing results is based on mutual trust among all parties involved. Currently, there is no reliable solution for privacy computing participated by multiple parties which do not trust one another. If a data provider tampers original data according to the demands of a data user, a computing results received by a data applicant tends to be invalid.

Moreover, privacy computing involves a wide range of technologies, and different algorithms are applicable to different numbers of users and computing scenarios. There is no universal solution that is suitable for multiple scenarios and multiple algorithms. The original data of the data provider may be leaked, and identity information of the data provider may also be leaked, resulting in insecure privacy computing.

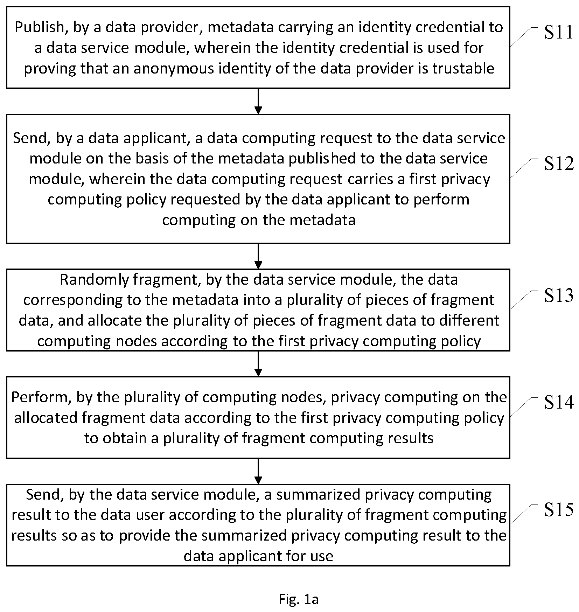

In order to solve the problems existing in the related art, embodiments of the present application provide a privacy data use method based on privacy computing. The present application can be applied to application scenarios of data sharing and data availability but invisibility. As shown in Fig. 1a, the method includes the following steps.

At S11: a data provider publishes metadata carrying an identity credential to a data service module, wherein the identity credential is used for proving that an anonymous identity of the data provider is trustable.

The data provider refers to a party that provides source data. The data provider can register its identity with a certificate authority (CA) authentication center in advance, the center will issue the identity credential to the data provider, and the identity credential can be used for proving that the anonymous identity of the data provider is trustable. Thus, the data provider uses an identity identifier for anonymity, which can protect personal privacy of the data provider and achieve anonymous sharing of data.

The data provider publishes the metadata carrying the identity credential to the data service module, and the data service module can authenticate the identity credential and publish the corresponding metadata after determining that the identity of the data provider is trustable. The data service module can publish metadata information in a form of an overview, so that a data applicant views basic information of the metadata and then determines whether to apply for the use of the metadata.

At S12: the data applicant sends a data computing request to the data service module on the basis of the metadata published to the data service module, wherein the data computing request carries a first privacy computing policy requested by the data applicant to perform computing on the metadata.

The data applicant may determine which metadata is requested to be used from the data service module by browsing the published metadata in the data service module according to data use demands of the data applicant. The data applicant generates the corresponding first privacy computing policy for the metadata that needs to be used, and the first privacy computing policy may specifically include which computing and processing steps need to be performed on the metadata. Furthermore, the data computing request is generated according to the first privacy computing policy and sent to the data service module to request the data service module to perform computation processing on the metadata according to the first privacy computing policy.

At S13: the data service module randomly fragments data corresponding to the metadata into a plurality of pieces of fragment data, and allocates the plurality of pieces of fragment data to different computing nodes according to the first privacy computing policy.

In this step, the data service module performs random fragmenting on the data corresponding to the metadata by using a data fragmenting method according to the metadata requested for use by the data applicant, and issues the plurality of obtained fragment data to the different computing nodes. Thus, each computing node participating in the computing only receives a part of the original data, and performs computing according to the first privacy computing policy in a case where original metadata cannot be restored. The solution provided in the present embodiment can convert privacy computing into computing of an instruction set which is parsed and executed by a virtual machine, does not rely on specific algorithms and environments, and can be applied as a common trusted privacy computing solution in various scenarios.

At S14: the plurality of computing nodes perform privacy computing on the allocated fragment data according to the first privacy computing policy to obtain a plurality of fragment computing results.

In the process of performing privacy computing, the plurality of computing nodes perform privacy computing on the allocated fragment data, and a specific rule of privacy computing is performed according to the first privacy computing policy. Because the data provider does not participate in privacy computing, the computing purpose of the data applicant cannot be presumed, and the metadata cannot be tampered according to the purpose of the data applicant, thereby ensuring that the data provider does not intervene in the computing process, and effectively improving the validity of a privacy result.

The solution provided in the embodiment of the present application applies fragment computing to perform privacy computing of the metadata, and the fragment computing is a computation jointly completed by the plurality of computing nodes on the basis of data security. After the plurality of computing nodes respectively perform privacy computing to obtain the plurality of fragment computing results, an execution engine may summarize the fragment results to obtain a final privacy computing result.

Optionally, in practical applications, the plurality of computing nodes may include a backup node to achieve a node fault-tolerance and evil-prevention mechanism, the problems in the related art that there are many types of privacy algorithms and different algorithms are used in different scenarios and different numbers of participants without a unified framework can be solved, and the plurality of computing nodes can be widely applied to a plurality of practical application scenarios.

In addition, algorithm implementation of the fragment computing may be specifically a computing method in an algorithm library module of computation scheduling according to the first privacy computing policy required by the data applicant, and a computation process file composed of a computing instruction set and generated by a computing policy based on an algorithm template. This file can adopt a byte code storage format and is parsed and executed by a virtual machine. The fragment computing is a universal trusted privacy computing framework and method, and can be widely applied in various practical application scenarios.

At S15: the data service module sends a summarized privacy computing result to the data applicant according to the plurality of fragment computing results so as to provide the summarized privacy computing result to the data applicant for use.

After each computing node completes the corresponding fragment data computing to obtain the fragment result, a computing engine can summarize the plurality of fragment results to obtain the privacy computing result.

The execution engine adopts the fragment computing method to parse and execute according to the computing process, and schedules the plurality of computing nodes to complete the computation together without leaking the data. Each computing node only completes the computation of the fragment data to obtain the fragment result, and the computing engine summarizes the encrypted fragment results to obtain the final result. The computing node is also known as a secure computing node in this example, and the computing node may decide whether to use ciphertext computing or plaintext computing according to whether a runtime environment is a trusted environment when executing computing instructions.

The execution engine may be specifically implemented as a secure virtual machine (SVM) for parsing and execution, and computation is completed by parsing a computing process file with a suffix of .svm and executing instructions one by one according to the computing process. The execution engine can be created and instantiated by task management for computation scheduling. The execution of a computing task is to start the engine to parse and execute the computing instructions one by one, and ultimately complete the summarizing process of the fragment results from the plurality of computing nodes.

Through the solution provided in the embodiment of the present application, the data provider publishes the metadata anonymously, which can protect the identity privacy of the data provider. The identity credential carried by the published metadata can effectively prove that the identity of the data provider is trustable, thereby ensuring the validity of the metadata source while protecting the privacy of the data provider. By randomly fragmenting the data corresponding to the metadata and allocating the data to different computing nodes to perform privacy computing, the privacy computing required by the data applicant can be achieved through the plurality of computing nodes. Moreover, the fragment data allocated to any computing node is only a part of the metadata, so as to prevent any computing node from restoring the metadata, thereby effectively avoiding metadata leakage. Since the data provider does not participate in privacy computing, the data provider can be prevented from modifying the metadata to affect the validity of privacy computing, and it can be ensured that the privacy computing result received by the data applicant is true and valid. Through the solution provided by the embodiment of the present application, the identity privacy security of the data provider can be ensured while implementing privacy computing, so that the data applicant receives the true and valid privacy computing result, thereby enhancing the security and validity of privacy computing.

In the embodiment of the present application, first, the data provider publishes the metadata carrying the identity credential to the data service module. The data provider publishes the metadata anonymously, which can protect the identity privacy of the data provider. The identity credential carried by the published metadata can effectively prove that the identity of the data provider is trustable, thereby ensuring the validity of the metadata source while protecting the privacy of the data provider. Then, the data applicant sends the data computing request to the data service module on the basis of the metadata published to the data service module, wherein the data computing request carries the first privacy computing policy requested by the data applicant to perform computing on the metadata. Next, the data service module randomly fragments the data corresponding to the metadata into the plurality of pieces of fragment data, and allocates the plurality of pieces of fragment data to different computing nodes according to the first privacy computing policy, so that the plurality of computing nodes perform privacy computing on the allocated fragment data according to the first privacy computing policy to obtain the plurality of fragment computing results. By randomly fragmenting the data and allocating the data to different computing nodes to perform privacy computing, the privacy computing required by the data applicant can be achieved through the plurality of computing nodes. Moreover, the fragment data allocated to any computing node is only a part of the data, so as to prevent any computing node from restoring the complete data, thereby effectively avoiding data leakage. Finally, the data service module sends the summarized privacy computing result to the data applicant according to the plurality of fragment computing results so as to provide the summarized privacy computing result to the data applicant for use. Since the data provider does not participate in privacy computing, the data provider can be prevented from modifying the data to affect the validity of privacy computing, and it can be ensured that the privacy computing result received by the data applicant is true and valid. Through the solution provided by the embodiment of the present application, the identity privacy security of the data provider can be ensured while implementing privacy computing, so that the data applicant receives the true and valid privacy computing result, thereby enhancing the security and validity of privacy computing.

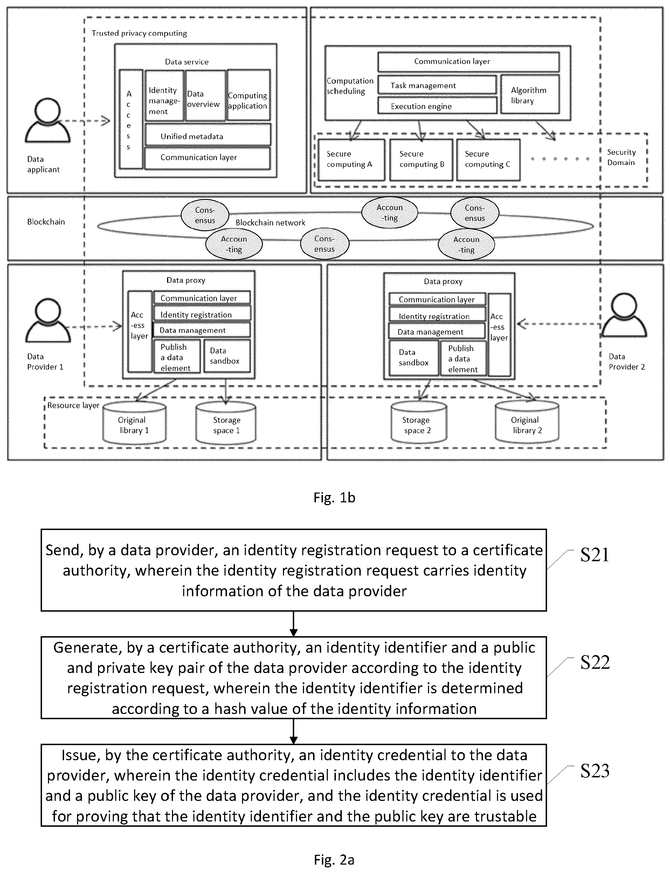

The solution provided in the present embodiment adopts a decentralized distributed architecture for networking, and this solution is illustrated below with reference to examples. This solution can be applied to a system including modules such as a data service, a data proxy, computation scheduling, a secure computing node, and a blockchain network. For example, Fig. 1b is a schematic structural diagram of a system for a privacy data use method based on privacy computing. Each module can be deployed in the following ways.

The data service and computation scheduling modules can be deployed in a physical machine server or a cloud environment in a central computer room in a manner of a physical process or a container.

The secure computing node can be deployed in a security domain in the central computer room, and computing instructions can be issued to the plurality of secure computing nodes for joint computation through a task management module for computation scheduling.

The data proxy module is deployed on a physical server or a cloud environment in a computer room of the data provider in a manner of a process or a container.

The blockchain network is jointly built based on the data service, the computation scheduling, and the data proxy, and collaborative computing is achieved through smart contracts.

Through the system provided in the embodiment of the present application, the privacy data use method based on privacy computing in the above embodiment can be implemented, which achieves data availability but invisibility through data anonymous trusted sharing and collaborative computing. Data service, the data proxy, the data scheduling, and the blockchain are combined to achieve the universal trusted privacy computing. On the premise of ensuring the personal privacy security of the data provider and the non-leakage of the original data, the data applicant can obtain correct and valid computing results, and the entire process is trusted and traceable.

Referring to Fig. 1b, a trusted privacy computing system in this example includes a blockchain network, a data service, a data proxy, computation scheduling, a secure computing node, a smart contract, and a communication interface. Functions of each part are introduced below separately.

Blockchain module: In this example, applicable blockchains are, for example, Hyperledger Fabric and Fisco Bcos, and a consortium chain network is jointly formed by a data sharing institution and a service center.

Data service module: the data service can be deployed on a server or a cloud environment in a central computer room. The data service faces data application users and can provide identity management, data overview, and application computing for the users. The service communicates with a data sandbox and data computing, and the data sandbox and a data computing module are coordinated to achieve privacy computing of unilateral or multi-party data, so as to achieve the available but invisible function of the data.

Access layer: providing a human-computer interaction function of data directory browsing and data computing application for an application user. The specific form of the human-computer interaction function can be selected according to actual demands, such as a command-line or user interface (UI) manner. The data service module includes the following sub modules:

identity management: providing an identity identifier for a data providing user, so as to achieve an anonymous publishing function of data elements.

Data overview: providing a browsing function of data elements that can be computed for application users, and relying on a unified metadata component at the lower level to provide functional support.

Computing application: providing the computing application of the data elements for the application users, collaborating with the data provider and computation scheduling to perform multi-party secure computation, and acquiring the final results to return to the application users.

Unified metadata: acquiring metadata information for published data from the data proxy of the data provider and providing the metadata information to the data overview for use.

Communication layer: communicating with the data proxy and the computation scheduling through a GRPC protocol interface, including acquiring the published metadata, issuing the computation application, and acquiring the computation result.

Data proxy module: the data proxy module is deployed on a server or a cloud environment in an institutional computer room, and the data provider can publish the data elements and share computing data through the data proxy. The data proxy creates an independent data storage space in a user space as a data sharing container for secure computing, and the container is referred to as a data sandbox in this example and can provide encrypted fragment data for data computing. The data proxy module includes the following sub modules.

Access layer: providing a human-computer interaction function of data sandbox management and maintenance for the data provider.

Communication layer: communicating with a data sharing service through a GRPC protocol interface, including uplink messages such as registration and data directory publishing.

Identity registration: providing an identity registration interface for the data provider, registering through identity management reported by the communication layer to the data service, and issuing an identity identifier and an identity credential to the provider.

Data management: being responsible for the management of local data, including approval of data computing application and the creation of the data sandbox for data sharing, as well as the management functions of the sandbox.

Data element publishing: being responsible for collecting local metadata and synchronizing the local metadata to the central unified metadata management to publish shared data element information.

Data sandbox: creating the independent storage space in the user space according to data management requirements for sharing data fragments and a right control function for accessing the data fragments.

Computation scheduling: the computation scheduling module can be deployed on the server or the cloud environment in the central computer room, and is mainly responsible for undertaking computing tasks and issuing the computing tasks to the secure computing nodes for execution, and ultimately collecting and summarizing the encrypted computing results to push the computing results to the computing application module of the data service. The computation scheduling module includes the following sub modules.

Communication layer: communicating with the data service and the data proxy through a remote procedure call (GRPC) protocol interface, including acquiring the shared encrypted data, accepting the computation tasks, and pushing the computing results and other messages.

Task management: being responsible for creating the corresponding computing tasks based on the computing application issued by the data service, generating a task policy and a computing process, performing parsing and executing through the computing engine, and returning the summarized encrypted computing results.

Algorithm library: providing an algorithm implementation template for trusted privacy computing for the computing task, including privacy summation, privacy multiplication, privacy intersection, etc., and generating a computing process file of the task according to the computing policy.

Computing engine: being responsible for parsing and executing the computing process, scheduling the security nodes involved in the computation to jointly complete the computation, and summarizing the fragment computing results of all nodes to obtain the final result.

Secure computing: the secure computing module can be deployed within the security domain of the central computer room to execute the computing instructions issued by the computing engine. Execution of the computing instructions includes arithmetic operations (addition/subtraction/multiplication/division), relational operations (comparing sizes), set operations (intersection), data pushing, etc. The deployment form of the secure computing nodes may be a physical process, and a container, or a trusted application (TA) in a trusted execution environment. Wherein the trusted execution environment (TEE) is a secure area within a CPU, and runs in an independent environment and runs in parallel with an operating system. The CPU ensures that confidentiality and integrity of codes and data in the TEE are protected. By using both hardware and software to protect the data and the codes, the TEE is more secure than the operating system.

Smart contract: the smart contract can be used to achieve functions such as cochain publishing of the identity identifier, collaborative computing tasks, and cochain storage of computing process data.

Through the solution provided in the embodiment of the present application, a method and system for making data available but invisible can be achieved through anonymous trusted sharing and collaborative computing. By combining the aforementioned data service, data proxy, computation scheduling, and blockchain, the universal trusted privacy computing can be achieved. On the premise of ensuring the personal privacy security of the data provider and the non-leakage of the original data, the correct and valid privacy computing results are provided for the data applicant, and the entire process is trusted and traceable.

Based on the solution provided in the above embodiment, optionally, as shown in Fig. 2a, the method further includes the following steps prior to the step S11 above.

At S21: the data provider sends an identity registration request to a certificate authority, wherein the identity registration request carries identity information of the data provider.

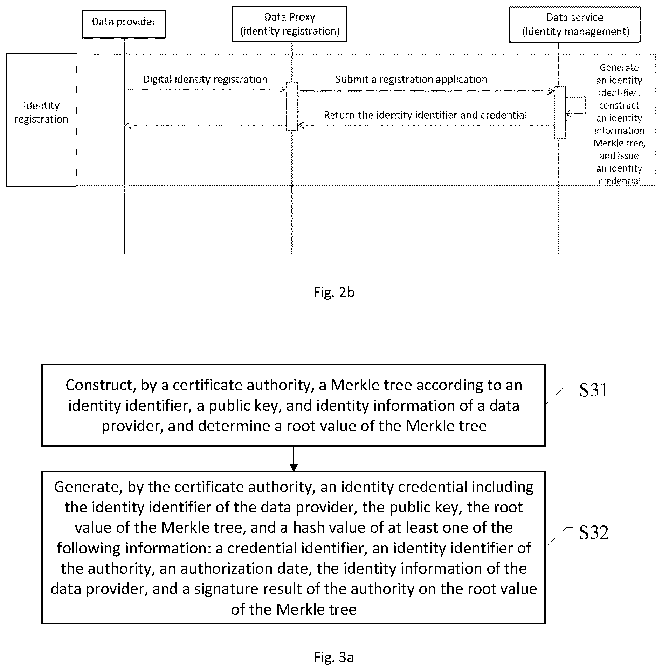

Fig. 2b is a schematic flow diagram of identity registration for the data provider. The above certificate authority, also known as a center, specifically refers to a CA authentication center, which adopts a public key infrastructure (PKI) technology and specializes in providing a network identity authentication service. The certificate authority is a third-party trusted institution which is responsible for issuing and managing digital certificates and has authority and impartiality.

In this step, the data provider sends the identity registration request carrying the identity information, and the identity information may include, for example, personal key information such as a name, a gender, a certificate type, and a certificate code. Specifically, the data provider may submit the identity registration request to the data service through the data proxy.

At S22: the certificate authority generates an identity identifier and a public and private key pair of the data provider according to the identity registration request, wherein the identity identifier is determined according to a hash value of the identity information.

The hash value of the identity information of the data provider may be determined as the identity identifier. The center performs identity registration and generates the identity credential for the provider, so as to achieve binding of an online identity identifier to an offline real identity.

At S23: the certificate authority issues the identity credential to the data provider, wherein the identity credential includes the identity identifier and a public key of the data provider, and the identity credential is used for proving that the identity identifier and the public key are trustable.

The center issues the generated identity credential to the data provider for proving that the anonymous identity of the data provider is trustable.

Through the solution provided in the embodiment of the present application, the data provider applies for the identity credential from the certificate authority in a manner of sending the identity registration request. The identity credential is issued by the third-party trusted institution with the authority and the impartiality, and can effectively represent the validity of the identity of the data provider. Furthermore, when the data provider publishes the metadata, the identity credential carried by the metadata can effectively represent the reliability of a metadata source. Thus, it is possible for the data provider to anonymously publish the metadata, thereby verifying the reliability of the metadata source through the identity credential while ensuring the security of the identity information of the data provider.

Based on the solution provided in the above embodiment, optionally, as shown in Fig. 3a, the method further includes the following steps prior to the step S23 above.

At S31: the certificate authority constructs a Merkle tree according to the identity identifier, the public key, and the identity information of the data provider, and determines a root value of the Merkle tree.

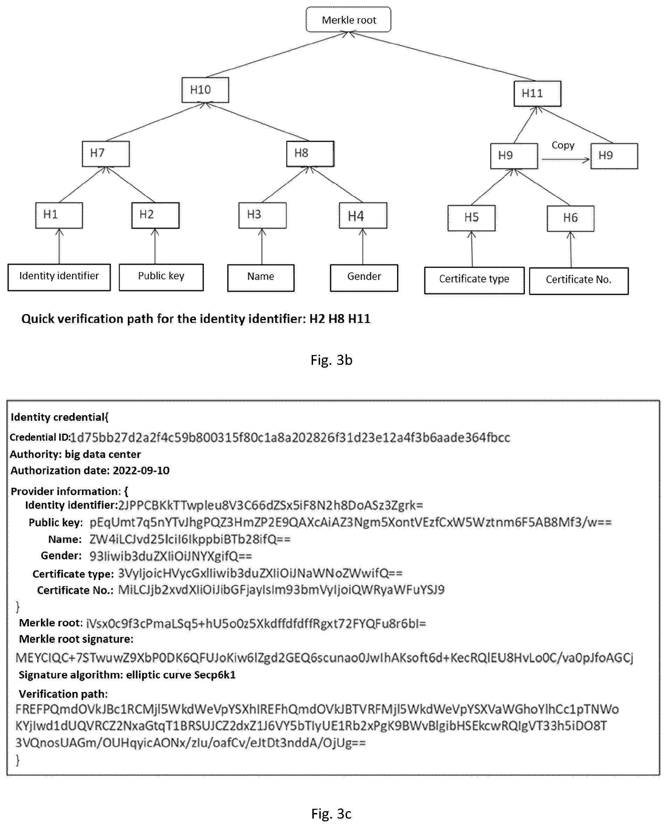

The Merkle tree, also known as a hash tree, is typically a binary tree. The Merkle tree includes a root node, an intermediate node, and a leaf node. In this step, the center constructs the Merkle tree by using various identity information from the data provider, as shown in Fig. 3b, the lowest layer of leaf node in the figure is the hash value of the various identity information of the data provider, including a hash value of the name, the gender, the certificate type, and the certificate number provided by the data provider, and further including a hash value of the identity identifier generated by the center according to the identity information of the data provider and a harsh value of the public key generated by the center according to the identity information of the data provider. In the Merkle tree shown in Fig. 3b, H1 is the hash value of the identity identifier, H2 is the hash value of the public key, and so on. In this example, the binary tree is taken as an example for illustration, and in practical applications, a multi-way tree can also be applied according to actual needs.

After determining the lowest layer of leaf node containing the identity information, two adjacent hash blocks are connected in series and subjected to a hash operation to obtain the intermediate node. For example, in Fig. 3b, H1 and H2 are connected in series for the hash operation to obtain the intermediate node H7. Similarly, H3 and H4 are connected in series for the hash operation to obtain the intermediate node H8. The rest can be done in the same manner, and computing is performed layer by layer until a root of the Merkle tree is obtained. If there is an odd number of nodes in a certain layer, for example, in Fig. 3b, a layer where H7, H8, and H9 are located has only three nodes, then the last individual node H9 is copied, and the two H9s are connected in series for the hash operation to obtain a node H11.

S32: the certificate authority generates an identity credential including the identity identifier of the data provider, the public key, the root value of the Merkle tree, and a hash value of at least one of the following information: a credential identifier, an identity identifier of the authority, an authorization date, the identity information of the data provider, and a signature result on the root value of the Merkle tree by the authority.

After the Merkle tree is constructed, the identity credential including the root value of the Merkle tree is generated, and the root value of the Merkle tree can be used for quickly verifying the authenticity of the identity of the data provider. By issuing the identity credential including the root value of the Merkle tree, it is convenient for the data provider to anonymously publish the data, and the identity credential can achieve quick verification of the reliability of the identity of the data provider.

Taking the Merkle tree shown in Fig. 3b as an example, the hash value of the identity identifier of the existing data provider and the identity credential including the root value of the Merkle tree are assumed. If the identity identifier of the data provider needs to be verified, a request for verifying the identity identifier H1 may be requested from the center. The center issues H2, H8, and H11 according to the request. Subsequently, H7 is subjected to hash computing according to the hash value H1 of the identity identifier and the H2 provided by the center. Then, H10 is subjected to hash computing according to the H7 and the H8 provided by the center. Finally, the Merkle root value is subjected to hash computing according to H10 and the H11 provided by the center. If the Merkle root value computed according to the identity identifier is consistent with the Merkle root value in the identity credential, it proves that the identity identifier of the data provider is trustable. A schematic diagram of a Json format of the identity credential is as shown in Fig. 3c.

Through the solution provided by the embodiment of the present application, the identity credential includes the root value of the Merkle tree. The root value of the Merkle tree can be used to quickly verify credibility of the anonymous identity, so as to use the root value of the Merkle tree in the identity credential to prove that the anonymous identity is trustable in a case of not leaking the identity privacy of the data provider, which is beneficial for achieving anonymous and trusted data sharing. The Merkle tree has the characteristic of preventing data tampering. Tampering of any information in the identity information will cause a change in the root value of the Merkle tree. Through the root value of the Merkle tree, the overall validity of the identity information of the data provider can be ensured, and anchoring of the anonymous identity and the real identity is achieved. Moreover, based on the identity credential including the root value of the Merkle tree, the identity of the data provider can be quickly verified, thereby verifying the reliability of the metadata source when publishing the metadata.

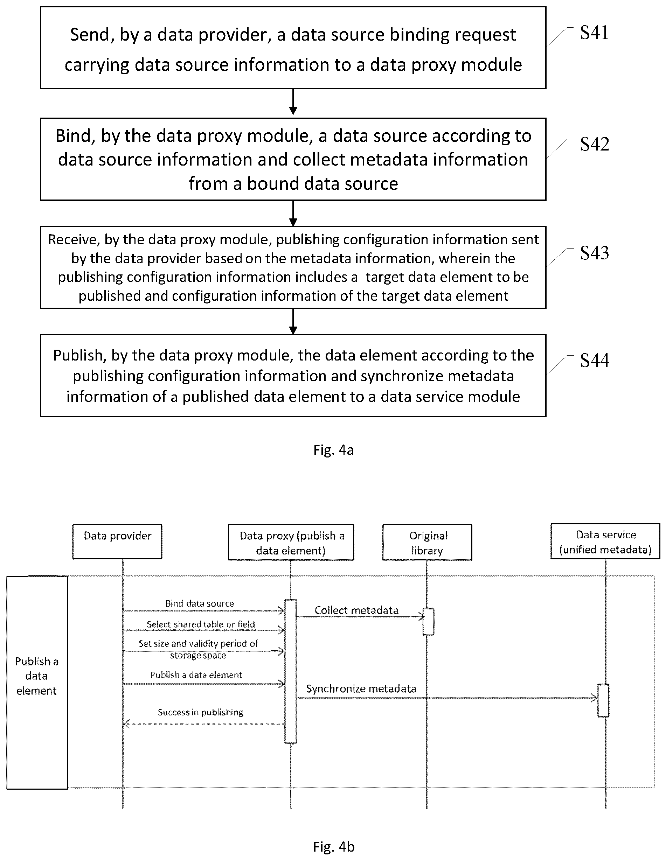

Based on the solution provided in the above embodiment, optionally, as shown in Fig. 4a, the step S11 above includes the following steps.

At S41: the data provider sends a data source binding request carrying data source information to a data proxy module.

Fig. 4b shows a process of the data provider requesting to bind a data source. In this step, the data provider binds the data source in a manner of sending the data source binding request, wherein the data source binding request may include an access address, account, and password of the data source, so that the data proxy collects metadata information from an original library.

At S42: the data proxy module binds a data source according to data source information, and collects the metadata information from a bound data source.

In this step, the data proxy module collects the metadata information according to the access address, account, and password of the data source.

At S43: the data proxy module receives publishing configuration information sent by the data provider based on the metadata information, wherein the publishing configuration information includes a target data element to be published and configuration information of the target data element.

The data provider selects a table, a field, and the like of the metadata to be published according to the metadata information collected by the data proxy. In addition, other configuration information such as a storage space size and a period of validity may also be set. After the data provider confirms the configuration for publishing the metadata, the data proxy publishes the metadata according to the configuration information.

At S44: the data proxy module publishes the data element according to the publishing configuration information and synchronizes metadata information of the published data element to the data service module.

The data proxy module synchronizes the metadata to the data service module to complete the publication of the data elements. Optionally, after completing the publication, the data proxy provides feedback to the data provider on a result that the metadata is successfully published.

Through the solution provided in the embodiment of the present application, the data provider sets the configuration information for the to-be-published metadata, and can set the details for publishing the metadata, so as to publish the metadata based on the settings of the data provider, which can improve the publishing efficiency of the metadata and ensure the integrity and validity of the published metadata. Moreover, the information of the published data element can be provided to the data applicant for browsing, which is beneficial for the data applicant to efficiently obtain attributes of the metadata, and is beneficial for the data applicant to determine the metadata that needs to be used, and determine the privacy computing policy, thereby improving the overall usage efficiency of privacy data.

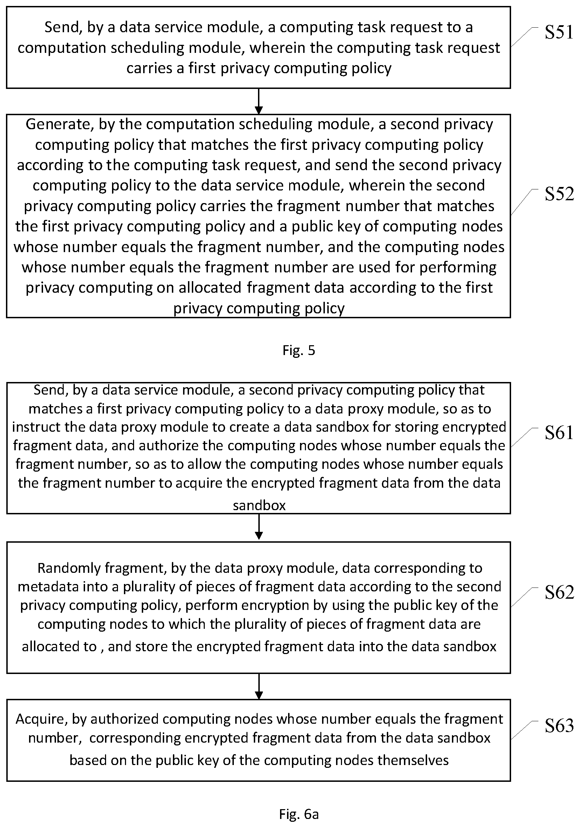

Based on the solution provided in the above embodiment, optionally, as shown in Fig. 5, the method further includes the following steps prior to the step S13 above.

At S51: the data service module sends a computing task request to a computation scheduling module, wherein the computing task request carries the first privacy computing policy.

In this step, the data service module sends the first privacy computing policy provided by the data applicant to the computation scheduling module. The first privacy computing policy can represent the computation requested by the data applicant and executed on the data. By sending the computing task request to the computation scheduling module, the computation scheduling module can determine computing nodes required for actual execution according to the first privacy computing policy.

At S52: the computation scheduling module generates a second privacy computing policy that matches the first privacy computing policy according to the computing task request, and sends the second privacy computing policy to the data service module, wherein the second privacy computing policy carries the fragment number that matches the first privacy computing policy and public keys of the computing nodes whose number equals the fragment number, and the computing nodes whose number equals the fragment number are used for performing privacy computing on the allocated fragment data according to the first privacy computing policy.

The computation scheduling module determines the fragment number to be subjected to random fragmenting according to the first privacy computing policy, so that fragmenting is executed in subsequent steps according to the fragment number. Moreover, the computing nodes to perform computing on the fragment data are determined. Generating the second privacy policy that includes the public key of the computing nodes whose number equals the fragment number can facilitate encrypting the allocated data fragment according to the public key of the computing nodes in the subsequent steps.

Through the solution provided by the embodiment of the present application, the fragment number that actually performs privacy computing and the corresponding computing nodes are determined according to the first privacy computing policy provided by the data applicant, so as to facilitate the actual performing of the privacy computing. By determining the fragment number of random fragmenting and the computing nodes whose number equals the fragment number, each computing node that actually performs the privacy computing can be determined. The public keys of these computing nodes can be used for allocating the fragment data to the computing nodes in the subsequent steps. In the step of determining the computing nodes and the fragment number, the data provider and the data applicant do not directly participate, which can improve the validity and security of privacy computing results.

Based on the solution provided in the above embodiment, optionally, as shown in Fig. 6a, the step S13 above includes the following steps.

At S61: the data service module sends the second privacy computing policy that matches the first privacy computing policy to the data proxy module, so as to instruct the data proxy module to create a data sandbox for storing encrypted fragment data, and authorizes the computing nodes whose number equals the fragment number computing nodes whose number equals the fragment number so as to allow the computing nodes whose number equals the fragment number to acquire the encrypted fragment data from the data sandbox.

The data proxy module creates the matching data sandbox according to the received second privacy computing policy, and the data sandbox is used for storing the encrypted fragment data, so as to allocate the data fragments to the plurality of computing nodes. The data proxy module may perform data sandbox access authorization on the plurality of matching computing nodes according to the public key in the second privacy computing policy, so as to allow the computing nodes to acquire the encrypted fragment data from the data sandbox.

During actual execution, the computation scheduling module may generate corresponding computing tasks according to the data elements to be subjected to privacy computing and the computing policy requested to be executed by the data applicant, so as to execute the computing process in the form of tasks. The computing nodes are not limited by specific algorithms and execution environments, and can be widely applied in various scenarios, with excellent universality.

At S62: the data proxy module randomly fragments the data corresponding to the metadata into a plurality of pieces of fragment data according to the second privacy computing policy, performs encryption by using the public key of the computing nodes to which the plurality of pieces of fragment data are allocated, and stores the encrypted fragment data in the data sandbox.

The data proxy module may perform random fragmenting on the metadata through the created data sandbox to obtain fragment data in the fragment number. The fragment data in the fragment number is allocated to the computing nodes in the fragment number, so that the computing nodes are in one-to-one correspondence with the fragment data. The matching fragment data is encrypted based on the public keys of the computing node in the second privacy computing policy, so as to obtain encrypted computing nodes in the fragment number, and the encrypted fragment data is stored in the data sandbox. In this way, each computing node participating in privacy computing can only receive a part of data and cannot restore the complete data, avoiding the problem of original data leakage.

The second privacy computing policy may include an authorized node list, which records the plurality of authorized computing nodes participating in privacy computing. In addition, the number of the authorized nodes may be greater than the number of the fragments, and the excess computing nodes can be used as backup nodes to enhance the overall stability of privacy computing.

At S63: the authorized computing nodes whose number equals the fragment number acquires corresponding encrypted fragment data from the data sandbox based on the public key of the computing nodes themeselves.

After the plurality of pieces of encrypted fragment data have been stored in the data sandbox, the authorized computing nodes may access the data sandbox, determine the matching encrypted fragment data based on the public keys of the authorized computing nodes and download the encrypted fragment data. After acquiring the matching encrypted fragment data, the computing nodes perform decryption based on the public key of the computing nodes to obtain the decrypted fragment data.

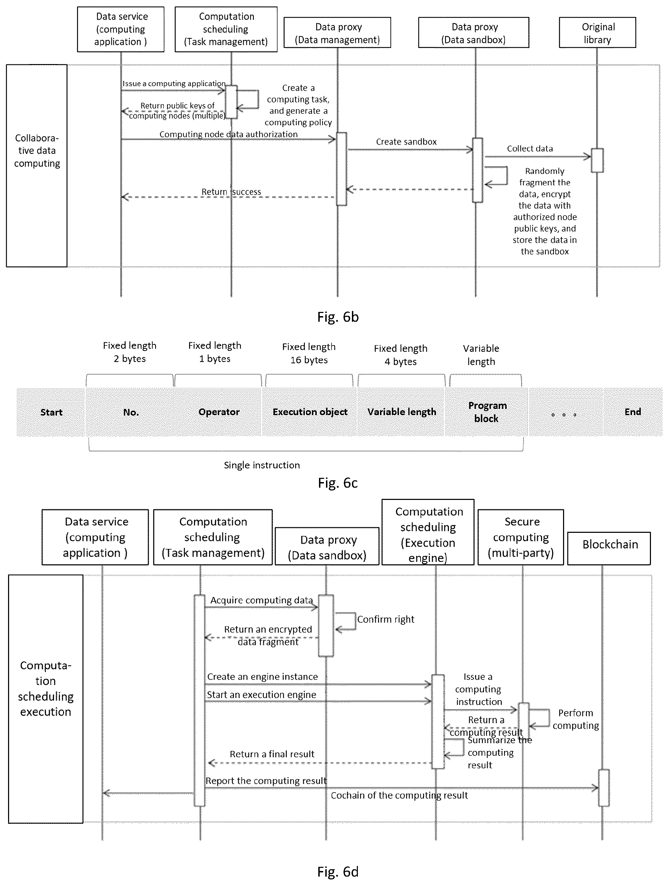

In the solution provided by the embodiment of the present application, the data service may instruct the computation scheduling module to perform the corresponding operations of the computing tasks by issuing tasks to the computation scheduling module. The issued tasks may include parameters such as the data elements, the computing method, and the public key of the data applicant. The computation scheduling may create the corresponding computing tasks according to the above parameters, which include the second privacy computing policy, specifically including the fragment number, the authorized nodes, the public keys of the authorized nodes, etc., and further including the computing process requested to perform on the metadata by the data applicant. Fig. 6b shows a schematic flow diagram of allocating the data fragments, including the following steps.

First, the data service sends a computing application to the data proxy of the data provider to apply for authorization for the secure computing nodes participating in the computation.

Subsequently, after receiving a data authorization application from the computing nodes, the data proxy creates the corresponding data sandbox. Relevant data is collected through the data sandbox, random fragmenting is performed according to the second privacy computing policy, the relevant data is encrypted using the public keys of the matching computing nodes and stored in the data sandbox, and a download link is returned, so that each computing node accesses the sandbox and downloads the matching data fragments.

Through the solution provided in the embodiment of the present application, the data sandbox is created based on the second privacy computing policy, and the storage and calling of the encrypted fragment data can be achieved through the data sandbox. The plurality of computing nodes are authorized to acquire the fragment data in the data sandbox. The encrypted fragment data in the sandbox is obtained by encryption based on the public keys of the matching computing nodes. Therefore, the computing nodes may acquire the matching encrypted fragment data from the data sandbox based on the private keys of the computing nodes and perform decryption. For any computing node, decryption cannot be performed on other unmatching encrypted fragment data stored in the data sandbox. Therefore, it is ensured that the computing nodes only decrypt the matching encrypted fragment data based on the private keys of the computing nodes, and then perform privacy computing to obtain the fragment results. In the solution provided in the embodiment of the present application, the plurality of pieces of encrypted fragment data are allocated to the matching computing nodes through the data sandbox, so that the computing nodes acquire the matching fragment data, thereby improving the security of issuing the fragment data to the computing nodes.

In an actual execution process, the computing nodes may perform privacy computing required by the data applicant based on computing instructions. The computing nodes can perform privacy computing according to a bytecode of a computing instruction set. Each computing instruction performs an operation, and the process starts with a begin statement and ends with an end statement. The specific instruction format is shown below.

| |
|---|
| [Number] [Operator] [Execution Object] [Program Block] |
| Number: execution order |
| Operator: arithmetic operations (addition, subtraction, multiplication, and division), relational operations (comparison), set operations (intersection), and pushing operations |
| Execution object: nodes that execute computing |
| Program block: a section of program code enclosed in curly braces. The specific content is determined by the operator, for example: computing operation is an expression of the plurality of computations, and the pushing operations are pushing objects and pushing variables |

The computation process may be saved in a compact bytecode stream format in a file with the suffix of .svm. The storage format of the computation process is shown in Fig. 6c, for example.

The computation process is illustrated below with reference to embodiments. Assuming that the data provided by a data provider A is X and the data provided by a data provider B is Y, the computing policy includes 2 fragments, and computing nodes A and B jointly participate in the computation, then, the computation process is as follows.

| |
|---|
| begin |
| Step 1, arithmetic operation Node A {e1=x1-a1; f1=y1-b1} |
| Step 2, arithmetic operation Node B {e2=x2-a2; f2=y2-b2} |
| Step 3, pushing operation Node A {push e1, f1 node B} |
| Step 4, pushing operation Node B {push e2, f2 node A} |
| Step 5, arithmetic operation Node A {e=e1+e2;f=f1+f2;t1=e*f+c1+b1*e+a1*f} |
| Step 6, arithmetic operation Node B {e=e1+e2;f=f1+f2;t2=c2+b2*e+a2*f} |
| Step 7, pushing operation Node A {push t1 scheduling node} |
| Step 8, push operation Node B {push t2 scheduling node} |
| Step 9, arithmetic operation Scheduling node {result=t1+t2} |
| end |

Optionally, the fragment data is encrypted based on the public keys of the matching computing nodes and stored in the data sandbox. When the matching computing nodes are the scheduling nodes, the public key of the data applicant can further be used for encryption. The number of the computing nodes in the computing policy generated by the computation scheduling can be equal to the fragment number, so that each computing node is allocated with one corresponding fragment data to perform computation. Alternatively, the number of the computing nodes may be greater than the fragment number, and the excessive computing nodes can be used as backup nodes. After each computing node completes privacy computing, encryption is performed. The scheduling nodes can summarize the plurality of encrypted fragment computing results. Computing summarization can be specifically performed using a homomorphic addition algorithm.

In the present embodiment, the task management module for computation scheduling can create an execution engine to coordinate the secure computing nodes to perform computation and return a final encrypted result. Fig. 6d shows a schematic flowchart of performing privacy computing.

First, the task management downloads the data fragments from the data sandbox, and after the data sandbox confirms the right, the encrypted data fragments are returned.

After obtaining the encrypted data fragments, the task management creates an execution engine instance, and introduces the computing process and the computed data fragments to start the computing tasks.

The execution engine gradually executes according to the execution steps of the computing process, and issues the computing instruction for each execution step to the secure computing node for single-step computation until the computing process ends.

After the computing process is completed, the execution engine finally summarizes the encrypted fragment computing results to obtain the final privacy computing result, returns the final privacy computing result to the data service, and performs cochain evidence preservation on the privacy computing process.

Through the solution provided in the embodiment of the present application, the data elements can be randomly fragmented, the plurality of random fragments are allocated to the plurality of different computing nodes to perform privacy computing, and then the plurality of fragment computing results are summarized to obtain the privacy computing results corresponding to the data elements for use by the data applicant. By randomly fragmenting the data elements and allocating the data elements to the computing nodes, not only can privacy computing for the data elements be achieved, but also the security and validity of privacy computing can be effectively improved, avoiding the invalidity of the computing results due to the participation of the data provider or the data applicant in privacy computing.

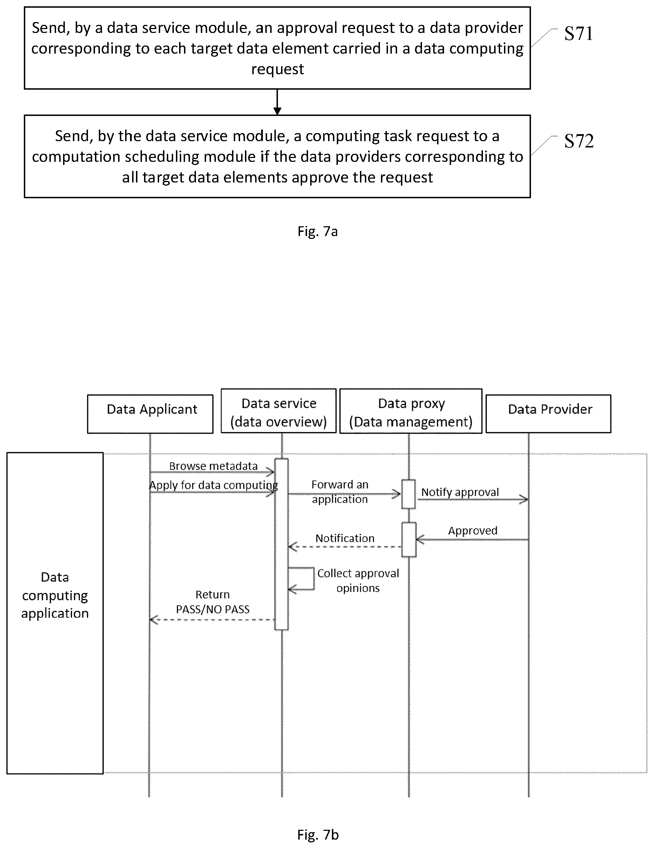

Based on the solution provided in the above embodiments, optionally, as shown in Fig. 7, the data computing request carries at least one target data element requesting to perform privacy computing.

Prior to the above step S51, the following steps may further be included.

At S71: the data service module sends an approval request to a data provider corresponding to each target data element carried in the data computing request.

Before performing privacy computing, the data provider needs to approve the request from the data applicant. In some scenarios, the privacy computing requested to perform by the data applicant involves the plurality of target data elements, and the approval request needs to be sent to the data provider corresponding to each target data element to request authorization from each data provider to use the corresponding target data element to perform privacy computing.

The data applicant browses the metadata information published by the data service, selects the data element, and submits the computing application. The data service forwards the request to the data provider for approval and summarizes the approval results of all involved data providers.

At S72: the data service module sends the computing task request to the computation scheduling module if the data providers corresponding to all the target data elements approve the request.

If all the providers approve, the application is approved; otherwise, the application is rejected and the result is returned to the applicant.

For example, Fig. 7b shows a schematic diagram of an approval process, and the solution provided in the present embodiment includes the following steps.

The data applicant views the published metadata information through a data overview function of the data service, and selects the data elements that need to be computed and a computing method to generate and submit the computing application. Then, the computing application module of the data service forwards the request to the data provider for approval. After being audited by various data providers, the data proxy returns the approval results to the data service, and the data service summarizes all approval opinions and returns the approval results to the data applicant.

Through the solution provided in the embodiment of the present application, the data provider can approve the request from the data applicant to use the metadata. In some application scenarios, the data requested to use by the data applicant may involve the data elements from the plurality of different data providers. To achieve the privacy computing required to be performed by the data applicant, approval authorization from the plurality of data providers needs to be obtained, so as to perform privacy computing requested by the data applicant on the data elements of the plurality of data providers on the basis of the approval authorization. The solution provided in the embodiment of the present application can be used to request approval of at least one target data element from at least one data provider. If all the data providers of the target data element approve the request, the privacy computing requested by the data applicant can be further performed.

The embodiments of the present application can achieve privacy security by using data anonymous trusted sharing and collaborative computing to make data availability but invisibility. The data service, the data proxy, the computation scheduling, and the blockchain are combined to achieve the trusted privacy computing. On the premise of ensuring non-leakage of the personal privacy and the original data of the provider, the applicant can obtain correct computing results, and the entire process is trusted and traceable. The solution provided in the embodiment of the present application has the following technical effects.
1. The data provider uses the identity identifier for anonymous data sharing, which can protect personal privacy of the data provider and achieve anonymous trusted sharing of the data.
2. Through authorization and sharing of the data fragments in the data sandbox, the security issues of data sharing can be solved, and data can be controlled and measured.
3. Using the computation scheduling execution engine to collaborate with multiple nodes for secure computation of the data fragments can ensure that a single node cannot restore the complete original data, and the execution engine summarizes the encrypted fragmenting results to obtain the final computing result, which can solve the problems of single point failure, and achieve the availability but invisibility of data.
4. The data applicant cannot deduce the original data by associating with the data provider through the results, so as to avoid data leakage and tampering.
5. The data provider cannot infer the purpose of the applicant and cannot interfere with the computing process to avoid computing result invalidity caused by data tampering.
6. The number and scenarios of the computing nodes participating in the computation in this solution are not limited by specific algorithms, and can be applied as a universal solution in various practical scenarios.

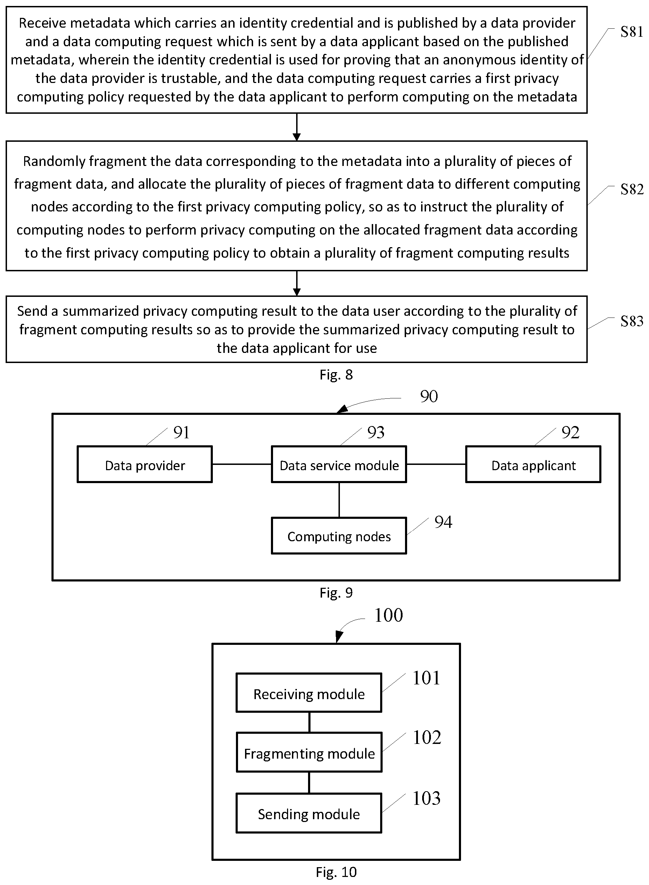

In order to solve the problems existing in the related art, an embodiment of the present application further provides a privacy data use method based on privacy computing. As shown in Fig. 8, the method is applied to a data service module and includes the following steps.
At S81: metadata which carries an identity credential and is published by a data provider and a data computing request which is sent by a data applicant based on the published metadata are received, wherein the identity credential is used for proving that an anonymous identity of the data provider is trustable, and the data computing request carries a first privacy computing policy requested by the data applicant to perform computing on the metadata;
At S82: data corresponding to the metadata is randomly fragmented into a plurality of pieces of fragment data, and the plurality of pieces of fragment data are allocated to different computing nodes according to the first privacy computing policy, so as to instruct the plurality of computing nodes to perform privacy computing on the allocated fragment data according to the first privacy computing policy to obtain a plurality of fragment computing results.
At S83: a summarized privacy computing result is sent to the data applicant according to the plurality of fragment computing results so as to provide the summarized privacy computing result to the data applicant for use.

Through the solution provided in the embodiment of the present application, the data provider publishes the metadata anonymously, which can protect the identity privacy of the data provider. The identity credential carried by the published metadata can effectively prove that the identity of the data provider is trustable, thereby ensuring the validity of the metadata source while protecting the privacy of the data provider. By randomly fragmenting the data corresponding to the metadata and allocating the data to different computing nodes to perform privacy computing, the privacy computing required by the data applicant can be achieved through the plurality of computing nodes. Moreover, the fragment data allocated to any computing node is only a part of the metadata, so as to prevent any computing node from restoring the metadata, thereby effectively avoiding metadata leakage. Since the data provider does not participate in privacy computing, the data provider can be prevented from modifying the metadata to affect the validity of privacy computing, and it can be ensured that the privacy computing result received by the data applicant is true and valid. Through the solution provided by the embodiment of the present application, the identity privacy security of the data provider can be ensured while implementing privacy computing, so that the data applicant receives the true and valid privacy computing result, thereby enhancing the security and validity of privacy computing.

In order to solve the problems existing in the related art, an embodiment of the present application provides a privacy data use apparatus 90 based on privacy computing, as shown in Fig. 9, including a data provider 91, a data applicant 92, a data service module 93, and a plurality of computing nodes 94.

The data provider 91 is configured to publish metadata carrying an identity credential to the data service module 93, wherein the identity credential is used for proving that an anonymous identity of the data provider 91 is trustable.

The data applicant 92 is configured to send a data computing request to the data service module 93 on the basis of the metadata published to the data service module 93, wherein the data computing request carries a first privacy computing policy requested by the data applicant 92 to perform computing on the metadata.

The data service module 93 is configured to randomly fragment data corresponding to the metadata into a plurality of pieces of fragment data, and allocate the plurality of pieces of fragment data to different computing nodes 94 according to the first privacy computing policy.

The plurality of computing nodes 94 are configured to perform privacy computing on the allocated fragment data according to the first privacy computing policy to obtain a plurality of fragment computing results.

The data service module 93 is configured to send a summarized privacy computing result to the data applicant 92 according to the plurality of fragment computing results so as to provide the summarized privacy computing result to the data applicant 92 for use.

Through the solution provided in the embodiment of the present application, the data provider publishes the metadata anonymously, which can protect the identity privacy of the data provider. The identity credential carried by the published metadata can effectively prove that the identity of the data provider is trustable, thereby ensuring the validity of the metadata source while protecting the privacy of the data provider. By randomly fragmenting the data corresponding to the metadata and allocating the data to different computing nodes to perform privacy computing, the privacy computing required by the data applicant can be achieved through the plurality of computing nodes. Moreover, the fragment data allocated to any computing node is only a part of the metadata, so as to prevent any computing node from restoring the metadata, thereby effectively avoiding metadata leakage. Since the data provider does not participate in privacy computing, the data provider can be prevented from modifying the metadata to affect the validity of privacy computing, and it can be ensured that the privacy computing result received by the data applicant is true and valid. Through the solution provided by the embodiment of the present application, the identity privacy security of the data provider can be ensured while implementing privacy computing, so that the data applicant receives the true and valid privacy computing result, thereby enhancing the security and validity of privacy computing.

In order to solve the problems existing in the related art, an embodiment of the present application provides a privacy data use apparatus 100 based on privacy computing, as shown in Fig. 10, including a receiving module 101, a fragmenting module 102, and a sending module 103.

The receiving module 101 is configured to receive metadata which carries an identity credential and is published by a data provider and a data computing request which is sent by a data applicant based on the published metadata, wherein the identity credential is used for proving that an anonymous identity of the data provider is trustable, and the data computing request carries a first privacy computing policy requested by the data applicant to perform computing on the metadata.

The fragmenting module 102 is configured to randomly fragment data corresponding to the metadata into a plurality of pieces of fragment data, and allocate the plurality of pieces of fragment data to different computing nodes according to the first privacy computing policy, so as to instruct the plurality of computing nodes to perform privacy computing on the allocated fragment data according to the first privacy computing policy to obtain a plurality of fragment computing results.

The sending module 103 is configured to send a summarized privacy computing result to the data applicant according to the plurality of fragment computing results so as to provide the summarized privacy computing result to the data applicant for use.

Through the solution provided in the embodiment of the present application, the data provider publishes the metadata anonymously, which can protect the identity privacy of the data provider. The identity credential carried by the published metadata can effectively prove that the identity of the data provider is trustable, thereby ensuring the validity of the metadata source while protecting the privacy of the data provider. By randomly fragmenting the data corresponding to the metadata and allocating the data to different computing nodes to perform privacy computing, the privacy computing required by the data applicant can be achieved through the plurality of computing nodes. Moreover, the fragment data allocated to any computing node is only a part of the metadata, so as to prevent any computing node from restoring the metadata, thereby effectively avoiding metadata leakage. Since the data provider does not participate in privacy computing, the data provider can be prevented from modifying the metadata to affect the validity of privacy computing, and it can be ensured that the privacy computing result received by the data applicant is true and valid. Through the solution provided by the embodiment of the present application, the identity privacy security of the data provider can be ensured while implementing privacy computing, so that the data applicant receives the true and valid privacy computing result, thereby enhancing the security and validity of privacy computing.

The above modules in the apparatus provided in the embodiments of the present application can also implement the steps of the method provided in the above method embodiments. Alternatively, the apparatus provided in the embodiments of the present application may also include other modules in addition to the above modules to implement the steps of the method provided in the above method embodiments. Moreover, the apparatus provided in the embodiments of the present application can achieve the technical effects that can be achieved by the above method embodiments.

An embodiment of the present application further provides an electronic device, including a processor, a memory, and a computer program stored in the memory and executable by the processor, wherein the computer program, when executed by the processor, implements various processes of the above privacy data use method embodiment based on privacy computing and can achieve the same technical effects, which is not repeated here to avoid repetition.

An embodiment of the present application further provides a computer readable storage medium, a computer program is stored on the computer readable storage medium, and the computer program, when executed by a processor, implements various processes of the above privacy data use method embodiment based on privacy computing and can achieve the same technical effects, which is not repeated here to avoid repetition. The computer readable storage medium is, for example, a read-only memory (ROM for short), a random access memory (RAM for short), a magnetic disk, or an optical disc.

Those skilled in the art should understand that the embodiments of the present application may be provided as methods, systems or computer program products. Therefore, the present application can adopt forms of full hardware embodiments, full software embodiments, or embodiments combining software and hardware aspects. Moreover, the present application may adopt a form of the computer program products implemented on one or more computer available storage media (including but not limited to a disk memory, a CD-ROM, an optical memory and the like) containing computer available program codes.

The present application is described with reference to flow diagrams and/or block diagrams of the methods, the devices (systems), and computer program products according to the embodiments of the present application. It should be understood that each flow and/or block in the flow diagrams and/or the block diagrams and combinations of the flows and/or the blocks in the flow diagrams and/or the block diagrams can be implemented by computer program instructions. These computer program instructions may be provided to a processor of a general-purpose computer, a special-purpose computer, an embedded processing machine or other programmable data processing devices to generate a machine, such that the instructions, when executed by the processor of the computer or other programmable data processing devices, generate an apparatus for implementing functions specified in one or more flows in the flow diagrams and/or one or more blocks in the block diagrams.

These computer program instructions may also be stored in a computer readable memory which can guide the computer or other programmable data processing devices to work in a specific mode, thus the instructions stored in the computer readable memory generates an article of manufacture that includes a commander apparatus that implement the functions specified in one or more flows in the flow diagrams and/or one or more blocks in the block diagrams.

These computer program instructions may also be loaded to the computer or other programmable data processing devices, so that a series of operating steps are executed on the computer or other programmable devices to generate computer-implemented processing, such that the instructions executed on the computer or other programmable devices provide steps for implementing the functions specified in one or more flows in the flow diagrams and/or one or more blocks in the block diagrams.

In a typical configuration, a computing device includes one or more processors (CPUs), input/output interfaces, network interfaces, and memories.

The memory may include a volatile memory, a random access memory (RAM), and/or a nonvolatile memory in the computer readable medium, such as a read-only memory (ROM) or a flash RAM. The memory is an example of the computer readable medium.

The computer readable medium, including transitory and non-transitory media as well as removable and non removable media, can be used by any method or technology to achieve information storage. Information can be computer-readable instructions, data structures, modules of programs, or other data. Examples of the storage medium for a computer include, but are not limited to, a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a read-only compact disk read-only memory (CD-ROM), a digital versatile disc (DVD) or other optical storage, a magnetic tape cartridge, a magnetic disk storage or other magnetic storage devices, or any other non transmission medium that can be used for storing information that can be accessed by the computing device. According to the definition herein, the computer readable medium does not include a transitory computer-readable media such as modulated data signals and carriers.

It should be further noted that terms "including", "containing", or any other variations are intended to cover non-exclusive inclusion, such that a process, method, commodity or device that includes a series of elements not only includes those elements, but also other elements that are not explicitly listed, or further include elements inherent in such the process, method, commodity or device. Without further limitations, the elements limited by a statement "including one..." do not exclude the existence of other identical elements in the process, method, commodity or device that includes the elements.

Those skilled in the art should understand that the embodiments of the present application may be provided as methods, systems or computer program products. Therefore, the present application can adopt forms of full hardware embodiments, full software embodiments, or embodiments combining software and hardware aspects. Moreover, the present application may adopt a form of the computer program products implemented on one or more computer available storage media (including but not limited to a disk memory, a CD-ROM, an optical memory and the like) containing computer available program codes.

The above is only the embodiments of the present application, and is not intended to limit the present application. For those skilled in the art, the present application can have various changes and variations. Any modification, equivalent replacement, improvement and the like made within the spirit and principle of the present application shall all be contained in the scope of claims of the present application.

## Claims

1. A privacy data use method based on privacy computing, comprising:
publishing, by a data provider, metadata carrying an identity credential to a data service module, wherein the identity credential is used for proving that an anonymous identity of the data provider is trustable;
sending, by a data applicant, a data computing request to the data service module on the basis of the metadata published to the data service module, wherein the data computing request carries a first privacy computing policy requested by the data applicant to perform computing on the metadata;
randomly fragmenting, by the data service module, data corresponding to the metadata into a plurality of pieces of fragment data, and allocating the plurality of pieces of fragment data to different computing nodes according to the first privacy computing policy;
performing, by the plurality of computing nodes, privacy computing on the allocated fragment data according to the first privacy computing policy to obtain a plurality of fragment computing results; and
sending, by the data service module, a summarized privacy computing result to the data applicant according to the plurality of fragment computing results so as to provide the summarized privacy computing result to the data applicant for use.

2. The method according to claim 1, wherein prior to publishing, by the data provider, the metadata carrying the identity credential to the data service module, the method further comprises:
sending, by the data provider, an identity registration request to a certificate authority, wherein the identity registration request carries identity information of the data provider;
generating, by the certificate authority, an identity identifier and a public and private key pair of the data provider according to the identity registration request, wherein the identity identifier is determined according to a hash value of the identity information; and
issuing, by the certificate authority, an identity credential to the data provider, wherein the identity credential comprises the identity identifier and a public key of the data provider, and the identity credential is used for proving that the identity identifier and the public key are trustable.

3. The method according to claim 2, wherein prior to issuing, by the certificate authority, the identity credential to the data provider, the method further comprises:
constructing, by the certificate authority, a Merkle tree according to the identity identifier, the public key, and the identity information of the data provider, and determining a root value of the Merkle tree; and
generating, by the certificate authority, the identity credential which comprises the identity identifier of the data provider, the public key of the data provider, the root value of the Merkle tree, and a hash value of at least one of the following information: a credential identifier, an identity identifier of an authority, an authorization date, the identity information of the data provider, or a signature result of the root value of the Merkle tree by the authority.

4. The method according to claim 2, wherein publishing, by the data provider, the metadata carrying the identity credential to the data service module comprises:
sending, by the data provider, a data source binding request carrying data source information to a data proxy module;
binding, by the data proxy module, a data source according to data source information, and collecting metadata information from a bound data source;
receiving, by the data proxy module, publishing configuration information sent by the data provider based on the metadata information, wherein the publishing configuration information comprises a target data element to be published and configuration information of the target data element; and
publishing, by the data proxy module, the target data element according to the publishing configuration information, and synchronizing metadata information of a published data element to the data service module.

5. The method according to claim 4, wherein prior to randomly fragmenting, by the data service module, the data corresponding to the metadata into the plurality of pieces of fragment data, and allocating the plurality of pieces of fragment data to the different computing nodes according to the first privacy computing policy, the method further comprises:
sending, by the data service module, a computing task request to a computation scheduling module, wherein the computing task request carries the first privacy computing policy; and
generating, by the computation scheduling module, a second privacy computing policy that matches the first privacy computing policy according to the computing task request, and sending the second privacy computing policy to the data service module, wherein the second privacy computing policy carries a fragment number that matches the first privacy computing policy and public keys of computing nodes whose number equals the fragment number, and the computing nodes whose number equals the fragment number are used for performing privacy computing on the allocated fragment data according to the first privacy computing policy.

6. The method according to claim 5, wherein randomly fragmenting, by the data service module, the data corresponding to the metadata into the plurality of pieces of fragment data, and allocating the plurality of pieces of fragment data to different computing nodes according to the first privacy computing policy comprises:
sending, by the data service module, the second privacy computing policy that matches the first privacy computing policy to the data proxy module, so as to instruct the data proxy module to create a data sandbox for storing encrypted fragment data, and authorizing computing nodes whose number equals the fragment number, so as to allow the computing nodes whose number equals the fragment number to acquire the encrypted fragment data from the data sandbox;
randomly fragmenting, by the data proxy module, the data corresponding to the metadata into a plurality of pieces of fragment data according to the second privacy computing policy, performing encryption by using the public keys of the computing nodes to which the plurality of pieces of fragment data are allocated, and storing encrypted fragment data into the data sandbox; and
acquiring, by authorized computing nodes whose number equals the fragment number, corresponding encrypted fragment data from the data sandbox based on the public keys of the computing nodes themselves.

7. The method according to claim 5 or 6, wherein the data computing request carries at least one target data element requesting to perform privacy computing;
wherein, prior to sending, by the data service module, the computing task request to the computation scheduling module, the method further comprises:
sending, by the data service module, an approval request to a data provider corresponding to each target data element carried in the data computing request; and
sending, by the data service module, the computing task request to the computation scheduling module in the case where the data providers corresponding to all the target data elements approve the request.

8. A privacy data use method based on privacy computing, applied to a data service module, comprising:
receiving metadata which carries an identity credential and is published by a data provider and a data computing request which is sent by a data applicant based on the published metadata, wherein the identity credential is used for proving that an anonymous identity of the data provider is trustable, and the data computing request carries a first privacy computing policy requested by the data applicant to perform computing on the metadata;
randomly fragmenting data corresponding to the metadata into a plurality of pieces of fragment data, and allocating the plurality of pieces of fragment data to different computing nodes according to the first privacy computing policy, so as to instruct the plurality of computing nodes to perform privacy computing on the allocated fragment data according to the first privacy computing policy to obtain a plurality of fragment computing results; and
sending a summarized privacy computing result to the data applicant according to the plurality of fragment computing results so as to provide the summarized privacy computing result to the data applicant for use.

9. A privacy data use apparatus based on privacy computing, comprising:
a data provider, configured to publish metadata carrying an identity credential to a data service module, wherein the identity credential is used for proving that an anonymous identity of the data provider is trustable;
a data applicant, configured to send a data computing request to the data service module on the basis of the metadata published to the data service module, wherein the data computing request carries a first privacy computing policy requested by the data applicant to perform computing on the metadata;
the data service module, configured to randomly fragment data corresponding to the metadata into a plurality of pieces of fragment data, and allocate the plurality of pieces of fragment data to different computing nodes according to the first privacy computing policy;
a plurality of computing nodes, configured to perform privacy computing on the allocated fragment data according to the first privacy computing policy to obtain a plurality of fragment computing results; and
the data service module, configured to send a summarized privacy computing result to the data applicant according to the plurality of fragment computing results so as to provide the summarized privacy computing result to the data applicant for use.

10. A privacy data use apparatus based on privacy computing, comprising:
a receiving module, configured to receive metadata which carries an identity credential and is published by a data provider and a data computing request which is sent by a data applicant based on the published metadata, wherein the identity credential is used for proving that an anonymous identity of the data provider is trustable, and the data computing request carries a first privacy computing policy requested by the data applicant to perform computing on the metadata;
a fragmenting module, configured to randomly fragment data corresponding to the metadata into a plurality of pieces of fragment data, and allocate the plurality of pieces of fragment data to different computing nodes according to the first privacy computing policy, so as to instruct the plurality of computing nodes to perform privacy computing on the allocated fragment data according to the first privacy computing policy to obtain a plurality of fragment computing results; and
a sending module, configured to send a summarized privacy computing result to the data applicant according to the plurality of fragment computing results so as to provide the summarized privacy computing result to the data applicant for use.

11. An electronic device, comprising a memory, a processor, and a computer program stored in the memory and executable by the processor, wherein the processor, when executed by the processor, implements steps of the method according to any one of claims 1 to 8.

12. A computer readable storage medium, having a computer program stored therein, wherein the computer program, when executed by a processor, implements steps of the method according to any one of claims 1 to 8.
